# EUROPEAN PATENT SPECIFICATION

(11) **EP 4 104 481 B1**
(45) Date of publication and mention of the grant of the patent: **08.04.2026**
(21) Application number: 20918331.8
(22) Date of filing: 10.02.2020
(51) Int. Cl.: G06F 21/57, H04W 12/122, H04L 9/40, G06F 21/55, G06F 21/88, H04W 12/68

(54) **PROPAGATING UE MISBEHAVIOR INFORMATION**
AUSBREITUNG VON BENUTZERGERÄTEFEHLVERHALTENSINFORMATIONEN
PROPAGATION D'INFORMATIONS DE MAUVAIS COMPORTEMENT D'UE

(43) Date of publication of application: 21.12.2022
(73) Proprietor: Nokia Technologies Oy, 02610 Espoo (FI)
(72) Inventor: THIEBAUT, Laurent, 92160 Antony (FR); LAIR, Yannick, 78960 Voisins le Bretonneux (FR)
(74) Representative: Script Intellectual Property LLP
(86) International application number: PCT/FI2020/050077
(87) International publication number: WO 2021/160921

(56) References cited:
- WO-A1-2019/080799
- WO-A1-2019/117773
- WO-A1-2019/192366
- WO-A1-2019/243874
- WO-A1-2019/243874
- CN-A- 110 650 034
- CHINA MOBILE ET AL: "TS 23.288 Performance Improvement and Supervision of general mode for mIoT Terminals", vol. SA WG2, no. Kochi, India; 20190121 - 20190125, 15 January 2019 (2019-01-15), XP051568589, Retrieved from the Internet <URL:http://www.3gpp.org/ftp/tsg%5Fsa/WG2%5FArch/TSGS2%5F130%5FKochi/Docs/S2%2D1900504%2Ezip> [retrieved on 20190115]
- 3GPP: "3rd Generation Partnership Project; Technical Specification Group Services and System Aspects; Study on the security aspects of the next generation system (Release 14)", 9 March 2017 (2017-03-09), pages 1 - 471, XP055481694, Retrieved from the Internet <URL:https://portal.3gpp.org/desktopmodules/Specifications/SpecificationDetails.aspx?specificationId=3045> [retrieved on 20180606]
- "3rd Generation Partnership Project; Technical Specification Group Services and System Aspects; Architecture enhancements for 5G System (5GS) to support network data analytics services (Release 16", 3GPP TS 23.288 V16.2.0 (2019-12), 22 December 2019 (2019-12-22), XP051839473, Retrieved from the Internet <URL:https://www.3gpp.org/ftp/Specs/archive/23_series/23.288/23288-g20.zip> [retrieved on 20200522]
- "3rd Generation Partnership Project; Technical Specification Group Services and System Aspects; Procedures for the 5G System (5GS); Stage 2 (Release 16", 3GPP TS 23.502 V16.3.0 (2019-12, 22 December 2019 (2019-12-22), XP051867065, Retrieved from the Internet <URL:https://www.3gpp.org/ftp/Specs/archive/23_series/23.502/23502-g30.zip> [retrieved on 20200522]
- "3rd Generation Partnership Project; Technical Specification Group Services and System Aspects; Study of Enablers for Network Automation for 5G (Release 16)", 3GPP TR 23.791 V16.2.0 (2019-06, 11 June 2019 (2019-06-11), XP051751789, Retrieved from the Internet <URL:https://www.3gpp.org/ftp/Specs/archive/23_series/23.791/23791-g20.zip> [retrieved on 20200525]
- NOKIA ET AL.: "Proposal for TEI17 work on enhanced user misbehaving or equipment misbehaving information handling", SA WG2 MEETING #137E, FEB 24 - 27, 2020, 18 February 2020 (2020-02-18), XP051855646, Retrieved from the Internet <URL:https://www.3gpp.org/ftp/tsg_sa/WG2_ArchATSGS2_137e_Etectronic/Docs/S2-2002263.zip> [retrieved on 20200522]

## Description

### Field of the invention

The present invention relates to UE misbehavior. In particular, it relates to propagating information on UE misbehavior.

### Abbreviations

- 3GPP: 3^{rd} Generation Partnership Project
- 5G: 5^{th} Generation
- 5GC: 5G Core
- AF: Authentication Framework
- AI: Artificial Intelligence
- AMF: Access Management Function
- DDoS: Distributed Denial of Service
- DL: Downlink
- DN: Data Network
- DNN: Data Network Name
- EIR: Equipment Identity Register
- HLR: Home Location Register
- HPLMN: Home PLMN
- HSS: Home Subscriber Server
- IMSI: International Mobile Subscription Identifier
- IP: Internet Protocol
- MBR: Maximum Bitrate
- MTC: Machine-type Communication
- NF: Network Function
- NSSAI: Network Slice Selection Assistance Information
- NSSF: Network Slice Selection Function
- NWDAF: Network Data Analytics Function
- PCC: Policy and Charging Control
- PCF: Policy Control Function
- PDU: Protocol Data Unit
- PEI: Permanent Equipment Identifier
- PLMN: Public Land Mobile Network
- QoS: Quality of Service
- RAN: Radio Access Network
- SDF: Service Data Flow
- SM: Session Management
- SMF: Session Management Function
- S-NSSAI: Single Network Slice Selection Assistance Information
- SUCI: Subscription Concealed Identifier
- SUPI: Subscription Permanent Identifier
- SW: Software
- TA: Tracking Area
- TAC: Type Allocation Code
- TS: Technical Specification
- UDM: Unified Data Management
- UDR: Unified Data Repository
- UE: User Equipment
- UP: User Plane
- UPF: User Plane Function
- VPLMN: Visited PLMN

### Background of the invention

3GPP TS 23.288 [3] § 6.7.5 describes how to identify with the help of NWDAF (Network Data Analytics Function) "a group of UEs or a specific UE with abnormal behaviour, e.g. being misused or hijacked".

3GPP TS 23.288 [3] § 6.7.5 specifies instantaneous behaviour, such as
If PCF subscribes notifications on "Abnormal behaviour", the NWDAF shall send the PCF notifications about the risk, which may trigger the PCF to update the AM/SM policies.

The NWDAF also sends the notification directly to the AMF or SMF, if the AMF or SMF subscribes the notification, so that the AMF or SMF may, based on operator local policies defined on a per S-NSSAI or per (DNN,S-NSSAI), take actions for risk solving. The following Table 6.7.5.3-2 gives examples of AM/SM policies and corresponding actions for solving each risk.

Patent document WO 2019/117773 also forms part of the background art.

**Table 6.7.5.3-3: Examples of policies and actions for risk solving**

| **Exception ID and description** | **Additional measurement** | **AM/SM policy** | **Actions of NFs** |
|---|---|---|---|
| Unexpected UE location | Unexpected UE location (TA or cells which the UE stays) | Add the area of current UE location into mobility restriction | PCF may extend the Service Area Restrictions. AMF may extend the mobility restriction |
| Unexpected long-live/large rate flows | Unexpected flow template (IP address 5 tuple) | Decrease the MBR for the related QoS flow | SMF updates the QoS rule. |
| | | | PCF, if dynamic PCC applies for corresponding DNN, S-NSSAI, updates PCC Rules that triggers SMF updates the QoS rule. |
| Unexpected wakeup | Time of unexpected wakeup | Apply MM back-off timer to the UE | AMF applies MM back-off timer to the UE |
| Suspicion of DDoS attack | Victim's address (target IP address list) | Release the PDU session and Apply SM back-off timer | PCF may request SMF to release the PDU session. |
| | | | SMF may release the PDU session and applies SM back-off timer |
| Wrong destination address | Wrong destination address (target IP address list) | Update the packet filter of the related QoS flow to block the wrong SDF | PCF updates the packet filter in the PCC Rules that triggers the SMF to update the related QoS flow and configures the UPF |
| Ping-pong UE | Numbers, frequency, time and location, assumptions about the possible circumstances | NWDAF notifies the AMF or AF (Service Provider) | AMF may adjust the UE (e.g. a stationary UE) registration area. |
| Too frequent Service Access/Abnormal traffic volume | Volume, frequency, time, assumptions about the possible circumstances | NWDAF notifies AF (Service Provider) | |
| Unexpected radio link failures | Numbers, frequency, time and location, assumptions about the possible circumstances | Not applicable | If the unexpected radio link failures are per UE location bases, the AMF may allow the use of CE (Coverage Enhancement) in the affected location. Also, the Operator may improve the coverage conditions in the affected location. |
| | | | If the unexpected radio link failures are per UE bases, then the AMF and/or the AF may allow the use of CE for the affected UE. |
| Ping-ponging across neighbouring cells | Numbers, frequency, time and location information, assumption about the possible circumstances of the ping-ponging | Not applicable | If the amount of ping-ponging across neighbouring cells is above the thresholds set by the service provider, the service provider may adjust and improve the antenna tilts of the neighbouring cells or the overlapping coverage conditions in the affected location. If the ping-ponging are per UE, then the AMF and/or the AF may allow the use of Coverage Enhancement for the affected UE. |

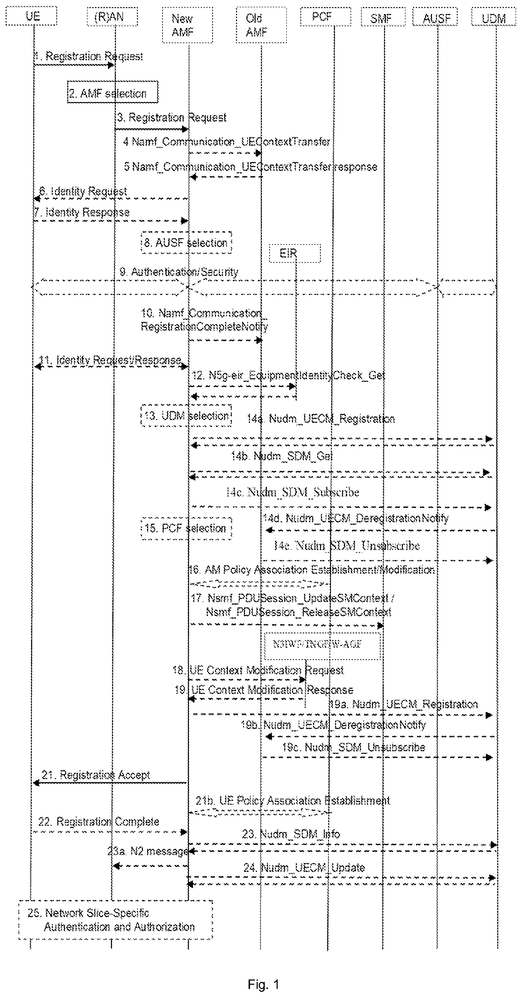

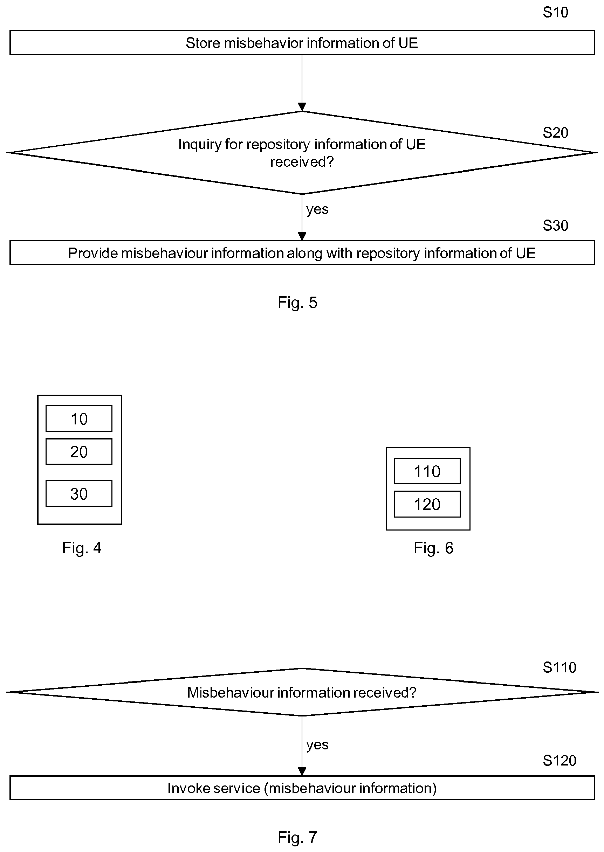

Fig. 1 shows a registration procedure according to 3GPP TS 23.502, Fig. 4.2.2.2.2-1. In message 12, the (new) AMF checks with the EIR if the UE equipment is registered as a stolen UE. If the UE stolen, the registration procedure is stopped, otherwise, it continues with 13. UDM selection.

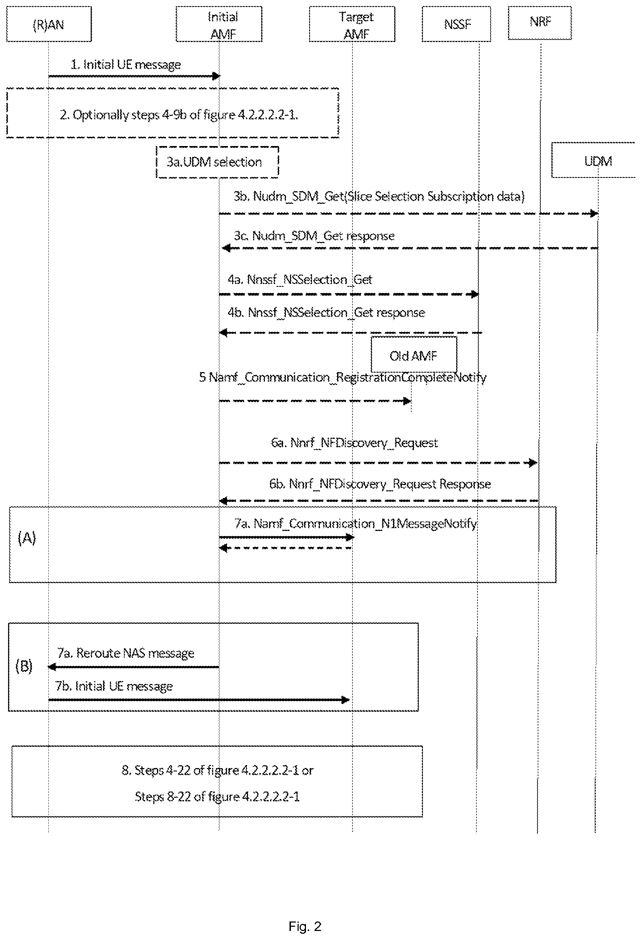

Fig. 2 shows a registration procedure with AMF re-allocation according to 3GPP TS 23.502, Fig. 4.2.2.2.3-1. By message 3b, AMF requests subscription information from UDM, which provides the subscription information by message 3c. By message 4a, the initial AMF sends a Nnssf_NSSelection_Get message to NSSF in order to instruct NSSF to select a slice for the UE.

### References:

[1] 3GPP TS 23.501, "System Architecture for the 5G System; Stage 2", V16.3.0, December 2019.
[2] 3GPP TS 23.502, "Procedures for the 5G System (5GS); Stage 2", V16.3.0, December 2019.
[3] 3GPP TS 23.288, "Architecture enhancements for 5G System (5GS) to support network data analytics services" (Release 16) V16.2.0, December 2019.
WO2019117773 discloses an access regulating device for a UE, which obtains an indication that the UE is potentially compromised, analyses it and selects a type of communication restriction, that may include barring the UE and limiting use of the network. The access regulating device may instruct a network node responsible for handling communication restrictions of the type of restriction.

### Summary of the invention

It is an object of the present invention to improve the prior art.

According to a first aspect of the invention, there is provided an apparatus according to claim 1.

According to a second aspect of the invention, there is provided a method according to claim 4.

The method of the second aspect may be a method of propagating misbehavior information.

According to a third aspect of the invention, there is provided a computer program product comprising a set of instructions which, when executed on an apparatus, is configured to cause the apparatus to carry out the method according to a second aspect.

According to some embodiments of the invention, at least one of the following advantages may be achieved:
- A misbehavior may be mitigated more safely;
- Slice selection may take into account the misbehavior.

It is to be understood that any of the above modifications can be applied singly or in combination to the respective aspects to which they refer, unless they are explicitly stated as excluding alternatives.

### Brief description of the drawings

Further details, features, objects, and advantages are apparent from the following detailed description of the preferred embodiments of the present invention which is to be taken in conjunction with the appended drawings, wherein:
Fig. 1 shows a registration procedure according to 3GPP TS 23.502, Fig. 4.2.2.2.2-1;
Fig. 2 shows a registration procedure with AMF re-allocation according to 3GPP TS 23.502, Fig. 4.2.2.2.3-1;
Fig. 3 shows a message flow according to some example embodiments of the invention.
Fig. 4 shows an apparatus related to an embodiment of the invention;
Fig. 5 shows a method related to an embodiment of the invention;
Fig. 6 shows an apparatus according to an embodiment of the invention;
Fig. 7 shows a method according to an embodiment of the invention;
Fig. 8 shows an apparatus related to an embodiment of the invention;
Fig. 9 shows a method related to an embodiment of the invention; and
Fig. 10 shows an apparatus according to an embodiment of the invention.

### Detailed description of certain embodiments

Herein below, certain embodiments of the present invention are described in detail with reference to the accompanying drawings, wherein the features of the embodiments can be freely combined with each other unless otherwise described. However, it is to be expressly understood that the description of certain embodiments is given by way of example only, and that it is by no way intended to be understood as limiting the invention to the disclosed details.

Moreover, it is to be understood that the apparatus is configured to perform the corresponding method, although in some cases only the apparatus or only the method are described.

Hereinafter, it is only considered how the network can protect itself against such misbehaving UE. This consideration may be independent from a reason why the UE is misbehaving (e.g. action from the owner, or the UE has been hijacked to create a DDoS attack).

According to the conventional behaviour as described in 3GPP TS 23.288 [3] § 6.7.5 (3GPP R16) and summarized hereinabove, the fact that an UE is ill-functioning or trying to attack the network (referred to afterwards as "misbehaving UE") is likely to be lost when the UE is switched off and then switched on again. In this case, a new AMF / SMF / PCF may be invoked to serve the UE and the new AMF / SMF / PCF does not know if the UE is misbehaving.

Conventionally, AMF/SMF/PCF do not know that a UE is misbehaving when they are first contacted to serve this UE. As one option, the new AMF / SMF / PCF may discover again that the UE is ill-functioning or trying to attack the network. For this purpose, the new AMF / SMF / PCF may request NWDAF to notify the new AMF / SMF / PCF if the UE is misbehaving (e.g. ill-functioning or trying to attack the network) when it its first contacted to serve the UE (e.g. the AMF may query the NWDAF as part of the attachment procedure). Thus, AMF / SMF / PCF receives most up-to-date misbehaviour information. On the other hand, this additional request to NWDAF introduces delays in handling properly the UE not also because of the additional message exchange with NWDAF, but also because the NWDAF may not have the information immediately at hand (e.g. in a distributed NWDAF deployment). Hence, it may take some time before the new AMF / SMF / PCF learns if the UE is misbehaving. This means that either the registration procedure and then PDU Session establishment procedure are delayed until the new AMF / SMF / PCF knows if the UE is misbehaving. This means that either the registration procedure and then PDU Session establishment procedure are delayed until the new AMF / SMF / PCF knows if the UE is misbehaving, OR that such procedures are carried out assuming that the UE is well behaving. If it turns out from the (delayed) response of NWDAF that the UE is actually misbehaving, then some complex behaviour is required to change the parameters (e.g. slice) of the UE registration or PDU Session of the UE according to the misbehaviour.

One or more of the "new AMF / SMF / PCF" may be the same as the "old AMF / SMF / PCF" or different therefrom. If the UE was switched off or detached from the network, the "old AMF / SMF / PCF" may remove the information on the UE, such as the information on misbehaviour (misbehaviour information), from its memory such that the "old AMF / SMF / PCF" acts like a "new AMF / SMF / PCF".

Some example embodiments of the invention provide a method (and a corresponding apparatus) as follows:
1. Information about misbehaving UEs is stored in a database (like EIR, or a stand-alone database).
2. When information about UE misbehavior is known by the AMF (by the SMF) as associated with the PEI, and the AMF (the SMF) provides the PEI to the SMF (to the PCF), the AMF (the SMF) propagates the information about UE misbehavior together with the PEI
3. Such data (information about UE misbehavior) may be provided (propagated) to 5GC NFs (Network Functions) or may be read by 5GC NFs for proper handling of such misbehaving UEs, e.g.:
   a. The AMF to provide the information related with UE misbehavior to the NSSF in order to assist the NSSF in its slice selection function for the UE. For example, misbehavior information may enable NSSF to isolate the misbehaving UEs in a dedicated slice, or to provide a slice with specific resources to the misbehaving UEs.
   b. The AMF to detach the UE.
   c. The PCF when creating policies for the PDU Sessions of the UE such as to allow the UE to only access some sites on the DN (for example allowing the UE only to fetch a proper SW or set of configuration data before any other UE action can be allowed)

Instead of or in addition to PEI (which identifies the equipment of the UE), a subscription information to identify a user of the UE such as SUPI may be used. In case subscription information is used, UDR may store the misbehaving information.

Hereinafter, some aspects of the invention are described at greater detail.

### Storing the information about misbehaving UEs in a database

When detecting the risk that a UE is misbehaving, the NWDAF stores information on UE misbehaviour in a database, which could be
- UDM/UDR for risks related to a user, i.e. a SUPI as defined in 3GPP TS 23.501 [1];
- EIR for risk related to an equipment, i.e. a PEI (Permanent Equipment Identifier as defined in 3GPP TS 23.501 [1]). For example, if the Software of the device has been altered by some malware (virus/trojan horse) the misbehavior should be associated with the device;
- EIR for risk related to an entire TAC if an entire TAC allocated to a device manufacturer is identified to be faulty.

In some example embodiments, the database may be a stand-alone database or a database of the NWDAF itself.

Information on UE misbehaviour may contain
- Abnormal behaviour Analytics output such as defined in 3GPP TS 23.288 [3], Table 6.7.5.3-1
- confidence about the assessment
- an information validity timer

Information on the Confidence about NWDAF analytics is defined in 3GPP TS 23.288 [3] § 6.2.1 as:
- The NWDAF may return a probability assertion as stated in clause 6.1.3 expressing the confidence in the analytics produced.

When a network function is contacted for a UE (in particular, if it is contacted the first time after detachment of the UE), it may fetch from the database (e.g. UDR/UDM and/or EIR) whether the UE (user and or device) is known to be misbehaving (Information on UE misbehaviour), and then use such misbehaviour information for subsequent handling of the UE.

For example, the AMF contacts UDM during initial UE registration (to fetch subscription data), and the UDM then may retrieve from UDR information about UE misbehaviour together with subscription data. Similarly, when the AMF is initially contacted by a UE, it gets the PEI of the UE and
- In many countries, the AMF checks EIR for detection of stolen devices. As part of this check it can also receive Information on misbehaviour of the device.
- Even if EIR check for detection of stolen devices is not deployed in a country, the operator may configure the AMF to invoke an EIR check to get Information on UE misbehaviour.

### Contacting the NSSF to select a slice instance for the UE;

As state of the art (see 3GPP TS 23.501 [1] §5.15), 3GPP specifications define NSSAI which is a set of S-NSSAI (Single Network Slice Selection Assistance Information). A S-NSSAI is a reference to a slice service template, i.e. a S-NSSAI refers to the grade of service expected by the UE when requesting a service within the corresponding slice. When at UE registration time the AMF has compared the UE requested NSSAI with the Subscribed NSSAI, the AMF contacts the NSSF which is responsible to map the S-NNSAI towards actual slice instances.

According to some example embodiments of the invention, AMF forwards the Information on UE misbehaviour to the NSSF. Then, the NSSF may select dedicated slice instances for a misbehaving UE; for example, a slice instance
- with lower priority in case of network congestion
- where the UE are only allowed to access a limited set of entities over N6 or where the amount of data the UE may send is throttled

The NWDAF may go on assessing the behaviour of UE and Refresh the information on UE misbehaviour in the database (e.g. UDM/UDR and EIR). E.g., the NWDAF may remove misbehaviour information for a UE if the UE is no more misbehaving, and/or it may refresh the associated confidence and/or validity timer.

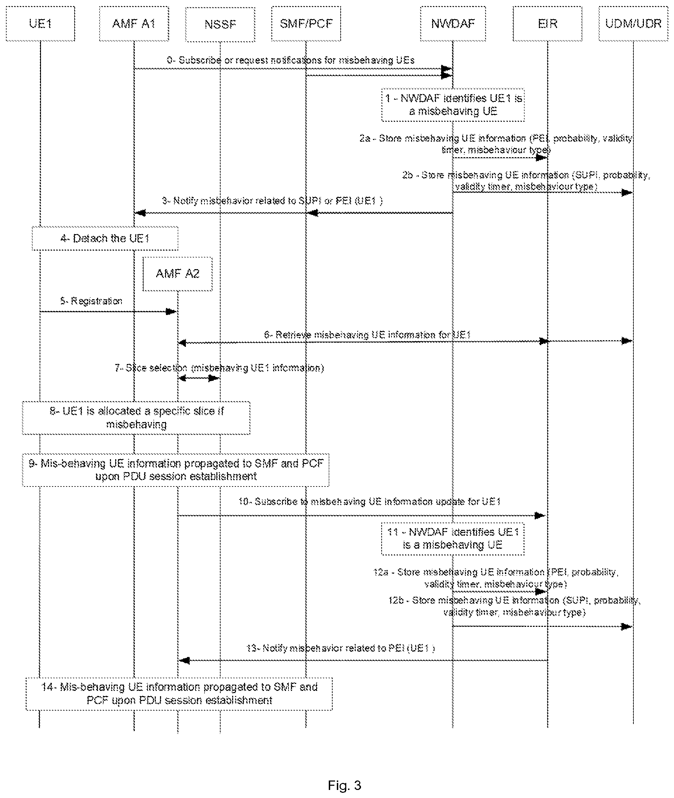

Fig. 3 shows a message flow according to some example embodiments of the invention. In an initial step, the NWDAF monitors the behavior of a UE or of a set of UE(s) based on previous requests from analytics consumers (here for example: AMF A1 and SMF/PCF; step 0). If the NWDAF identifies that UE1 is a misbehaving UE (see box 1 in Fig. 3) or that UE1 is no more misbehaving or a change in the confidence level on the misbehaviour, the NWDAF stores the Information on UE misbehaviour:
- 2a) in EIR (if the Information on UE misbehaviour is to be associated with PEI) and/or
- 2b) in UDM/UDR (if the Information on UE misbehaviour is to be associated with SUPI). Typically, this applies only in case of non-roaming case.

If misbehaviour information is stored in EIR (option 2a), the EIR service allows an authorized NF to write or update information in EIR. The EIR data model is accordingly adapted. If the misbehaviour information is stored in the UDM/UDR, the UDM/UDR data model is accordingly adapted. By message 3, NWDAF informs its clients (consumers; here: AMF A1 and SMF/PCF) about the misbehaviour (or the change of the misbehaviour).

In box 4, the AMF A1 takes appropriate action e.g. possibly detach the UE1, or the UE1 detaches form the network.

For simplicity, the next messages are described assuming that the information on UE misbehaviour is to be associated with PEI and accordingly stored in EIR.

5) Later, the UE1 registers with AMF A2 (i.e., initial registration). AMF A2 is not aware that NWDAF informed AMF A1 on the misbehaviour. Note that the description applies for AMF A2 different from AMF A1 but also applies to the scenario where the UE registers again with AMF A1.

6) During the initial registration, the AMF A2 retrieves the information on UE misbehaviour from EIR. This may take place at step 12 of Figure 4.2.2.2.2-1 of 3GPP TS 23.502 [2] (see Fig. 1). The N5g-eir_EquipmentldentityCheck_Get service operation (defined in 3GPP TS 23.502 [2], clause 5.2.4.2.2) is accordingly adapted.

7) During the initial registration, the fact that the Information on UE misbehaviour is new or different from what the AMF has stored may be a trigger for AMF to request Slice selection information from NSSF; when the AMF invokes Nnssf_NSSelection_Get as defined in step 4a of 3GPP TS 23.502 [2] Figure 4.2.2.2.3-1: "Registration with AMF re-allocation procedure" (see Fig. 2), per the invention this procedure is updated to allow the AMF to propagate Information on UE misbehaviour to the NSSF; note that the fact of contacting the NSSF for slice selection does not mean that an AMF change needs to take place, even though this is an option (to isolate Misbehaving UE(s) in dedicated AMF).

8) The NSSF takes into account information on UE misbehaviour when determining the final Allowed NSSAI and when mapping S-NSSAI(s) to actual network slices.

9) When the UE establishes a PDU Session, the AMF propagates Information on UE misbehaviour to the SMF (together with the PEI) and the SMF propagates (together with the PEI) Information on UE misbehaviour to the PCF.

In order to clarify the difference for a case that the information on UE misbehaviour is to be associated with SUPI and accordingly stored in UDM/UDR, the differences starting from message 6 onwards and up to message 9 are described below:

Instead of message 6 above, in response to message 3b of 3GPP TS 23.502 [2], Figure 4.2.2.2.3-1, AMF to UDM: Nudm_SDM_Get (SUPI, Slice Selection Subscription data) (see Fig. 2), the AMF gets Information on UE misbehaviour in message 3c. According to some example embodiments of the invention, the UE subscription data defined by 3GPP TS 23.502, Table 5.2.3.3.1-1 may additionally comprise misbehaviour information on the UE, as shown in Table 1 (last row):

**Table 1: Modified UE Subscription data types, based on 3GPP TS 23.502, Table 5.2.3.3.1-1**

| | | |
|---|---|---|
| Slice Selection Subscription data (data needed for | Subscribed S-NSSAls | The Network Slices that the UE subscribes to. In roaming case, it indicates the subscribed network slices applicable to the serving PLMN. |
| Slice Selection as described in clause 4.2.2.2.3 and in clause 4.11.0a.5) | Default S-NSSAls | The Subscribed S-NSSAls marked as default S-NSSAI. In the roaming case, only those applicable to the Serving PLMN. |
| | S-NSSAls subject to Network Slice-Specific Authentication and Authorization | The Subscribed S-NSSAls marked as subject to NSSAA. |
| | Information on UE misbehaviour | |

Then, messages 7 to 9 above are exchanged. In message 9, the information on UE misbehaviour is propagated to SMF and PCF along with the SUPI instead of along with the PEI.

In some example embodiments, the UE misbehaviour may be related to both PEI and SUPI. In such embodiments, both variants of the message exchange of Fig. 3 are performed.

In some example embodiments, the AMF A2, after initially checking UE misbehaviour information in the EIR (as e.g. by message 6 of Fig. 3), subscribes to EIR notification about UE misbehaviour information updates (message 10). When the NWDAF detects that the UE is misbehaving or the UE misbehaviour has changed (box 11), the NWDAF stores the information in EIR (message 12a), and the EIR subsequently notifies the AMF about the new UE misbehaviour information (message 13). When the UE establishes a PDU Session, the AMF propagates new information on UE misbehaviour to the SMF (together with the PEI) and the SMF propagates (together with the PEI) new information on UE misbehaviour to the PCF (box 14). In this example, the misbehaviour information is related to the UE equipment and, consequently, stored in EIR.

A corresponding mechanism applies if the misbehaviour information is related to the user of the UE and stored in UDM/UDR. In this case, correspondingly to message 10, AMF A2 subscribes to UDM/UDR to be notified on an update of UE misbehaviour information. If NWDAF, in box 11, identifies that the UE1 is misbehaving (or that the misbehaviour has changed), it stores this information in UDM/UDR (message 12b). Due to this update information from NWDAF, UDM/UDR notifies AMF A2 on the updated misbehaviour information of UE1, correspondingly to message 13. E.g. upon PDU session establishment, AMF A2 propagates the new UE misbehaviour information to SMF/PCF (correspondingly to box 14).

Instead of EIR and/or UDM/UDR, in some example embodiments, the misbehaviour information may be stored in a database separate from EIR and UDM/UDR.

Fig. 4 shows an apparatus related to an embodiment of the invention. The apparatus may be a data repository, such as an EIR or UDM/UDR, or an element thereof. Fig. 5 shows a method related to an embodiment of the invention. The apparatus according to Fig. 4 may perform the method of Fig. 5 but is not limited to this method. The method of Fig. 5 may be performed by the apparatus of Fig. 4 but is not limited to being performed by this apparatus.

The apparatus comprises means for storing 10, means for monitoring 20, and means for providing 30. The means for storing 10, means for monitoring 20, and means for providing 30 may be a storing means, monitoring means, and providing means, respectively. The means for storing 10, means for monitoring 20, and means for providing 30 may be a storage device, monitor, and a provider, respectively. The means for storing 10, means for monitoring 20, and means for providing 30 may be a storing processor, monitoring processor, and providing processor, respectively.

The means for storing 10 stores a received misbehavior information on a misbehavior of a user equipment (S10).

The means for monitoring 20 monitors if an inquiry for a repository information on the user equipment is received (S20). If the inquiry is received (S20 = yes), the means for providing 30 provides the misbehavior information along with the repository information in response to the inquiry (S30). Here, "providing along" may mean that the misbehavior information is provided in the same message as the repository information, or it may mean that the misbehavior information is provided in a separate message, in addition to the message providing the repository information. The separate message may be sent before or after the message providing the repository information or simultaneously therewith.

Repository information denotes substantially static information related to the UE such as whether the equipment (device) is stolen, or subscription information (subscription data) of the user of the UE.

Fig. 6 shows an apparatus according to an embodiment of the invention. The apparatus may be a network function, such as an AMF, SMF, or PCF, or an element thereof. Fig. 7 shows a method according to an embodiment of the invention. The apparatus according to Fig. 6 may perform the method of Fig. 7 but is not limited to this method. The method of Fig. 7 may be performed by the apparatus of Fig. 6 but is not limited to being performed by this apparatus.

The apparatus comprises means for monitoring 110 and means for invoking 120. The means for monitoring 110 and means for invoking 120 may be a monitoring means and invoking means, respectively. The means for monitoring 110 and means for invoking 120 may be a monitor and invoker, respectively. The means for monitoring 110 and means for invoking 120 may be a monitoring processor and invoking processor, respectively.

The means for monitoring 110 monitors if a first network function receives a misbehavior information on a misbehavior of a user equipment (S110). The first network function may be configured to provide a service for the user equipment.

If the first network function received the misbehavior information (S110 = yes), the means for invoking 120 invokes, by a request, a second service for the user equipment from a second network function (S120). The request comprises the misbehavior information.

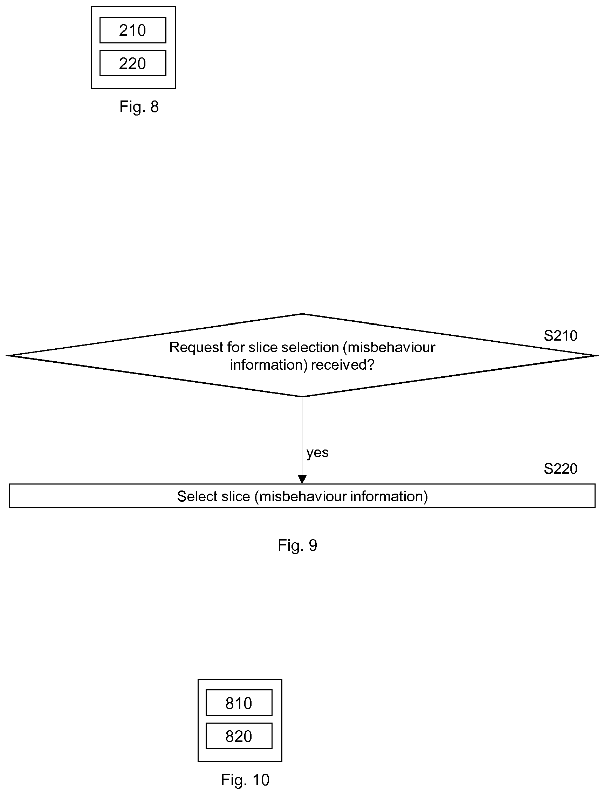

Fig. 8 shows an apparatus related to an embodiment of the invention. The apparatus may be a slice selection function, such as a NSSF, or an element thereof. Fig. 9 shows a method related to an embodiment of the invention. The apparatus according to Fig. 8 may perform the method of Fig. 9 but is not limited to this method. The method of Fig. 9 may be performed by the apparatus of Fig. 8 but is not limited to being performed by this apparatus.

The apparatus comprises means for monitoring 210 and means for selecting 220. The means for monitoring 210 and means for selecting 220 may be a monitoring means and selecting means, respectively. The means for monitoring 210 and means for selecting 220 may be a monitor and selector, respectively. The means for monitoring 210 and means for selecting 220 may be a monitoring processor and selecting processor, respectively.

The means for monitoring 210 monitors if a request to select a slice for a user equipment is received (S210). The request comprises a misbehavior information on a misbehavior of the user equipment.

If the misbehavior information is received (S210 = yes), the means for selecting 220 selects a slice for the user equipment based on the misbehavior information.

Fig. 10 shows an apparatus according to an embodiment of the invention. The apparatus comprises at least one processor 810, at least one memory 820 including computer program code, and the at least one processor 810, with the at least one memory 820 and the computer program code, being arranged to cause the apparatus to at least perform at least one of the methods according to Figs. 5, 7, and 9 and related description.

Some example embodiments of the invention are described, wherein the misbehavior information is stored in the EIR and/or UDM/UDR. However, in some example embodiments of the invention, the misbehavior information may be stored in a misbehavior database different from the EIR and/or different from the UDM/UDR (e.g. a stand-alone database). In this case, there are two options to retrieve the misbehavior information from the misbehavior database:
a) The AMF (or any other network function inquiring the EIR or the UDM/UDR) retrieves the misbehavior information from the misbehavior database by an inquiry additional to the inquiry of EIR and the inquiry of UDM/UDR, respectively.
b) Before replying to the inquiry from the AMF (or from any other network function inquiring the EIR or the UDM/UDR), the EIR and UDM/UDR, respectively, retrieves the misbehavior information from the misbehavior database. Then, EIR and UDM/UDR, respectively, reply to the inquiry such that the reply comprises the misbehavior information in addition to other requested repository data from the EIR and UDM/UDR, respectively.

In some example embodiments of the invention, the NWDAF may be considered as the "stand-alone database". I.e., AMF may query the NWDAF in the attachment procedure of the UE and then, it may propagate the received misbehavior information to other NFs serving the UE. Thus, these embodiments provide a hybrid solution between the option that each NF queries NWDAF when it is contacted to serve the UE (in particular, when it is contacted to serve the UE for the first time after detachment of the UE) and the option that AMF retrieves the misbehavior information from EIR and/or UDM/UDR and propagates it (directly or indirectly) to other network functions.

Some example embodiments of the invention are described where the presence of a misbehavior information for a UE is considered as an indication that the UE is misbehaving. However, in some example embodiments of the invention, the misbehavior information may be present for all UEs analyzed by the NWDAF. In this case, the misbehavior information has different values dependent on whether or not NWDAF considers that the UE is misbehaving. For example, as a default, for UEs not analyzed by NWDAF, the misbehavior information may indicate that the UE is not misbehaving, or it may indicate that NWDAF does not analyze the behavior of this UE. In the latter case, the misbehavior information may assume at least three different values (misbehavior, no misbehavior, not analyzed).

One piece of information may be transmitted in one or plural messages from one entity to another entity. Each of these messages may comprise further (different) pieces of information.

Names of network elements, network functions, protocols, and methods are based on current standards. In other versions or other technologies, the names of these network elements and/or network functions and/or protocols and/or methods may be different, as long as they provide a corresponding functionality. For example, instead of in the UDM/UDR, the misbehavior information may be stored in a HLR or HSS. Instead of SUPI, another subscription identifier such as SUCI or IMSI may be used.

In the present application, a UE is considered as the combination of a terminal (hardware) and a user. The terminal may be e.g. a mobile phone, a smart phone, a MTC device, a laptop etc. The user may be a human user or a machine (e.g. in MTC).

If not otherwise stated or otherwise made clear from the context, the statement that two entities are different means that they perform different functions. It does not necessarily mean that they are based on different hardware. That is, each of the entities described in the present description may be based on a different hardware, or some or all of the entities may be based on the same hardware. It does not necessarily mean that they are based on different software. That is, each of the entities described in the present description may be based on different software, or some or all of the entities may be based on the same software.

According to the above description, it should thus be apparent that example embodiments of the present invention provide, for example, a repository function such as a UDM/UDR or a EIR, or a component thereof, an apparatus embodying the same, a method for controlling and/or operating the same, and computer program(s) controlling and/or operating the same as well as mediums carrying such computer program(s) and forming computer program product(s). According to the above description, it should thus be apparent that example embodiments of the present invention provide, for example, a network function such as a AMF, NSSF, SMF, or PCF, or a component thereof, an apparatus embodying the same, a method for controlling and/or operating the same, and computer program(s) controlling and/or operating the same as well as mediums carrying such computer program(s) and forming computer program product(s).

Implementations of any of the above described blocks, apparatuses, systems, techniques or methods include, as non-limiting examples, implementations as hardware, software, firmware, special purpose circuits or logic, general purpose hardware or controller or other computing devices, or some combination thereof. Each of the entities described in the present description may be embodied in the cloud.

It is to be understood that what is described above is what is presently considered the preferred embodiments of the present invention. However, it should be noted that the description of the preferred embodiments is given by way of example only and that various modifications may be made without departing from the scope of the invention as defined by the appended claims.

## Claims

1. Apparatus, comprising
means for monitoring (110) if a first network function receives a misbehavior information on a misbehavior of a user equipment;
means for invoking (120) a service for the user equipment by a request from a second network function comprising a network slice selection function;, wherein the request for the service comprises the misbehavior information if the first network function received the misbehavior information;
means for inquiring the misbehavior information by an inquiry;
means for checking if the first network function is contacted a first time to serve the user equipment; wherein
the means for inquiring is configured to inquire for the misbehavior information if the first network function is contacted the first time to serve the user equipment.
wherein
the means for monitoring is configured to monitor if the first network function receives the misbehavior information in response to the inquiry.

2. The apparatus according to claim 1, wherein
the first network function is at least one of an access function, a mobility function, an access and mobility function, and a session management function.

3. The apparatus according to any of claims 1 or 2, wherein
the means for inquiring is configured to inquire for a repository information on a device of the user equipment or on a subscription information of a user of the user equipment along with the inquiry for the misbehavior information.

4. Method, comprising
monitoring (S110) if a first network function receives a misbehavior information on a misbehavior of a user equipment;
invoking (S120) a service for the user equipment from a second network function comprising a network slice selection function by a request, wherein the request for the service comprises the misbehavior information if the first network function received the misbehavior information;
checking if the first network function is contacted a first time to serve the user equipment and if so inquiring the misbehavior information by an inquiry; wherein
the monitoring comprises monitoring if the first network function receives the misbehavior information in response to the inquiry.

5. The method according to claim 4, wherein
the first network function is at least one of an access function, a mobility function, an access and mobility function, and a session management function.

6. The method according to claim 4 or 5, further comprising
inquiring for a repository information on a device of the user equipment or on a subscription information of a user of the user equipment along with the inquiry for the misbehavior information.

7. A computer program product comprising a set of instructions which, when executed on an apparatus, is configured to cause the apparatus to carry out the method according to any of claims 4 to 6.

8. The computer program product according to claim 7, embodied as a computer-readable medium or directly loadable into a computer.

## Patentansprüche

1. Vorrichtung, umfassend
Mittel zum Überwachen (110), um zu überwachen, ob eine erste Netzwerkfunktion eine Fehlverhaltensinformation über ein Fehlverhalten eines Benutzergeräts empfängt;
Mittel zum Aufrufen (120), um einen Dienst für das Benutzergerät durch eine Anfrage von einer zweiten Netzwerkfunktion aufzurufen, die eine Netzwerk-Slice-Auswahlfunktion umfasst, wobei die Anfrage für den Dienst die Fehlverhaltensinformation umfasst, wenn die erste Netzwerkfunktion die Fehlverhaltensinformation empfangen hat;
Mittel zum Abfragen, um die Fehlverhaltensinformation durch eine Abfrage abzufragen;
Mittel zum Prüfen, um zu prüfen, ob die erste Netzwerkfunktion erstmalig kontaktiert wird, um das Benutzergerät zu bedienen; wobei
die Mittel zum Abfragen konfiguriert sind, um die Fehlverhaltensinformation abzufragen, wenn die erste Netzwerkfunktion erstmalig kontaktiert wird, um das Benutzergerät zu bedienen.
wobei
die Mittel zum Überwachen konfiguriert sind, um zu überwachen, ob die erste Netzwerkfunktion die Fehlverhaltensinformation als Antwort auf die Abfrage empfängt.

2. Vorrichtung nach Anspruch 1, wobei
die erste Netzwerkfunktion mindestens eine aus einer Zugangsfunktion, einer Mobilitätsfunktion, einer Zugangs- und Mobilitätsfunktion und einer Sitzungsverwaltungsfunktion ist.

3. Vorrichtung nach einem der Ansprüche 1 oder 2, wobei
die Mittel zum Abfragen konfiguriert sind, um eine Speicherinformation über ein Gerät des Benutzergeräts oder über eine Abonnementinformation eines Benutzers des Benutzergeräts zusammen mit der Abfrage für die Fehlverhaltensinformation abzufragen.

4. Verfahren, umfassend
Überwachen (S110), ob eine erste Netzwerkfunktion eine Fehlverhaltensinformation über ein Fehlverhalten eines Benutzergeräts empfängt;
Aufrufen (S120) eines Dienstes für das Benutzergerät von einer zweiten Netzwerkfunktion, die eine Netzwerk-Slice-Auswahlfunktion umfasst, durch eine Anfrage, wobei die Anfrage für den Dienst die Fehlverhaltensinformation umfasst, wenn die erste Netzwerkfunktion die Fehlverhaltensinformation empfangen hat;
Prüfen, ob die erste Netzwerkfunktion erstmalig kontaktiert wird, um das Benutzergerät zu bedienen, und falls ja, Abfragen der Fehlverhaltensinformation durch eine Abfrage; wobei
das Überwachen das Überwachen umfasst, ob die erste Netzwerkfunktion die Fehlverhaltensinformation als Antwort auf die Abfrage empfängt.

5. Verfahren nach Anspruch 4, wobei
die erste Netzwerkfunktion mindestens eine aus einer Zugangsfunktion, einer Mobilitätsfunktion, einer Zugangs- und Mobilitätsfunktion und einer Sitzungsverwaltungsfunktion ist.

6. Verfahren nach Anspruch 4 oder 5, ferner umfassend
Abfragen einer Speicherinformation über ein Gerät des Benutzergeräts oder über eine Abonnementinformation eines Benutzers des Benutzergeräts zusammen mit der Abfrage für die Fehlverhaltensinformation.

7. Computerprogrammprodukt, umfassend einen Satz von Anweisungen, die, wenn sie auf einer Vorrichtung ausgeführt werden, konfiguriert sind, um die Vorrichtung zu veranlassen, das Verfahren nach einem der Ansprüche 4 bis 6 auszuführen.

8. Computerprogrammprodukt nach Anspruch 7, verkörpert als computerlesbares Medium oder direkt in einen Computer ladbar.

## Revendications

1. Appareil, comprenant
des moyens de surveillance (110) pour surveiller si une première fonction de réseau reçoit une information de comportement inapproprié concernant un comportement inapproprié d'un équipement utilisateur ;
des moyens d'invocation (120) pour invoquer un service pour l'équipement utilisateur par une requête auprès d'une deuxième fonction de réseau comprenant une fonction de sélection de tranche de réseau, dans lequel la requête pour le service comprend l'information de comportement inapproprié si la première fonction de réseau a reçu l'information de comportement inapproprié ;
des moyens d'interrogation pour interroger l'information de comportement inapproprié par une interrogation ;
des moyens de vérification pour vérifier si la première fonction de réseau est contactée une première fois pour servir l'équipement utilisateur ; dans lequel
les moyens d'interrogation sont configurés pour interroger l'information de comportement inapproprié si la première fonction de réseau est contactée la première fois pour servir l'équipement utilisateur.
dans lequel
les moyens de surveillance sont configurés pour surveiller si la première fonction de réseau reçoit l'information de comportement inapproprié en réponse à l'interrogation.

2. Appareil selon la revendication 1, dans lequel
la première fonction de réseau est au moins l'une parmi une fonction d'accès, une fonction de mobilité, une fonction d'accès et de mobilité, et une fonction de gestion de session.

3. Appareil selon l'une quelconque des revendications 1 ou 2, dans lequel
les moyens d'interrogation sont configurés pour interroger une information de dépôt concernant un dispositif de l'équipement utilisateur ou concernant une information d'abonnement d'un utilisateur de l'équipement utilisateur conjointement avec l'interrogation pour l'information de comportement inapproprié.

4. Procédé, comprenant
la surveillance (S110) pour déterminer si une première fonction de réseau reçoit une information de comportement inapproprié concernant un comportement inapproprié d'un équipement utilisateur ;
l'invocation (S120) d'un service pour l'équipement utilisateur auprès d'une deuxième fonction de réseau comprenant une fonction de sélection de tranche de réseau par une requête, dans lequel la requête pour le service comprend l'information de comportement inapproprié si la première fonction de réseau a reçu l'information de comportement inapproprié ;
la vérification si la première fonction de réseau est contactée une première fois pour servir l'équipement utilisateur et, dans l'affirmative, l'interrogation de l'information de comportement inapproprié par une interrogation ; dans lequel
la surveillance comprend la surveillance pour déterminer si la première fonction de réseau reçoit l'information de comportement inapproprié en réponse à l'interrogation.

5. Procédé selon la revendication 4, dans lequel
la première fonction de réseau est au moins l'une parmi une fonction d'accès, une fonction de mobilité, une fonction d'accès et de mobilité, et une fonction de gestion de session.

6. Procédé selon la revendication 4 ou 5, comprenant en outre
l'interrogation d'une information de dépôt concernant un dispositif de l'équipement utilisateur ou concernant une information d'abonnement d'un utilisateur de l'équipement utilisateur conjointement avec l'interrogation pour l'information de comportement inapproprié.

7. Produit de programme informatique comprenant un ensemble d'instructions qui, lorsqu'elles sont exécutées sur un appareil, sont configurées pour amener l'appareil à exécuter le procédé selon l'une quelconque des revendications 4 à 6.

8. Produit de programme informatique selon la revendication 7, incorporé en tant que support lisible par ordinateur ou directement chargeable dans un ordinateur.
